# EUROPÄISCHE PATENTANMELDUNG

(11) **EP 4 542 316 A1**
(43) Veröffentlichungstag der Anmeldung: **23.04.2025**
(21) Anmeldenummer: 23205043.5
(22) Anmeldetag: 20.10.2023
(51) Int. Cl.: G05B 19/406, B23F 23/12

(54) **VERFAHREN ZUM SCHLEIFEN EINER VERZAHNUNG**

(71) Anmelder: Klingelnberg GmbH, 42499 Hückeswagen (DE)
(72) Erfinder: Stramm, Sebastian, 50825 Köln (DE); Gorgels, Christof, 50733 Köln (DE)
(74) Vertreter: Janke Scholl Patentanwälte PartG mbB

(57) **Zusammenfassung**

Verfahren, mit den Verfahrensschritten: Schleifen einer Verzahnung (2) eines Bauteils (4) mittels einer Verzahnungsschleifmaschine (6), wobei während des Schleifens des Bauteils (4) eine Mehrzahl bauteilspezifischer Maschinendaten erfasst werden, wie Bearbeitungsparameter, Spindelströme, Regelabweichungen oder dergleichen; Bestimmen eines Ergebnisses oder mehrerer Ergebnisse einer computerimplementierten Wälzprüfung (cWP) der Verzahnung (2) des Bauteils (4), indem die bauteilspezifischen Maschinendaten oder daraus abgeleitete Parameter als Eingangsdaten an ein Datenmodell übergeben werden, wobei das Datenmodell Korrelationen zwischen Ergebnissen von prüfstandsbasierten Wälzprüfungen (pWP) und den Ergebnissen von prüfstandsbasierten Wälzprüfungen (pWP) zugeordneten, bauteilspezifischen Maschinendaten aufweist und wobei anhand der Eingangsdaten ermittelte Ausgangsdaten des Datenmodells dem zu bestimmenden Ergebnis oder den zu bestimmenden Ergebnissen der computerimplementierten Wälzprüfung (cWP) entsprechen.

## Beschreibung

Die vorliegende Erfindung betrifft ein Verfahren zum Schleifen einer Verzahnung eines Bauteils mittels einer Verzahnungsschleifmaschine, wobei während des Schleifens des Bauteils eine Mehrzahl bauteilspezifischer Maschinendaten erfasst werden, wie Bearbeitungsparameter, Spindelströme, Regelabweichungen oder dergleichen.

Verzahnungen werden häufig mit der Prozesskette "Vorverzahnen", "Härten" und "Hartfeinbearbeiten" hergestellt. Die Hartfeinbearbeitung kann beispielsweise durch das Schleifen der Verzahnung erfolgen.

Um sicherzustellen, dass für beispielsweise in einer Serienfertigung hergestellte Verzahnungen die geforderten Toleranzen eingehalten werden, werden gemäß dem Stand der Technik Qualitätsregelkreise verwendet. Hierbei werden die gefertigten Verzahnungen gemessen und/oder getestet, um Abweichungen der gefertigten Verzahnung zu vorgegebenen Sollwerten der Verzahnung zu bestimmen. Anhand der Abweichungen kann einerseits das Bauteil als Gutteil oder Schlechtteil eingestuft und gegebenenfalls einer Nachbearbeitung unterzogen werden, und andererseits können anhand der Abweichungen Korrekturen für die entsprechenden Fertigungsschritte zur Herstellung der Verzahnung abgeleitet werden.

Die Grundlage eines solchen Qualitätsregelkreises sind demnach an einer betreffenden Verzahnung eines Bauteils ermittelte Abweichungen, sodass beispielsweise die voranstehend genannten Korrekturen für einen Schleifprozesses anhand von Bauteilabweichungen bestimmt werden.

Verzahnungen, die beispielsweise in den Antriebssträngen elektromotorisch betriebener Fahrzeuge eingesetzt werden, werden häufig bezüglich ihres Geräuschverhaltens in sogenannten Wälzprüfungen getestet. Dadurch, dass bei rein elektromotorisch betriebenen Kraftfahrzeugen ein Getriebegeräusche nicht mehr bzw. in geringerem Umfang durch das Motorgeräusch maskiert wird, ist es essenziell, dass keine geräuschauffälligen Verzahnungen ausgeliefert und in solchen rein elektromotorisch betriebenen Kraftfahrzeugen verbaut werden. In vielen Fällen findet daher eine 100 % Prüfung aller in einer Serienfertigung für die Elektromobilität gefertigten Verzahnungen statt. Es ist ersichtlich, dass hierdurch ein erheblicher Prüfaufwand entsteht. Die Wälzprüfung ist keine End-of-Line Prüfung auf einem End-of-Line-Prüfstand (EOL-Prüfstand). D.h. die Wälzprüfung des Bauteils erfolgt nicht in der endgültigen Einbausituation in einem Getriebe, sondern durch Abwälzen mit einem Meisterrad oder einem zugehörigen Gegenrad.

Zudem ist es bekannt, dass Achsen und Antriebe von Verzahnungsschleifmaschinen während des Maschinenbetriebs überwacht werden, um Defekte oder einen Wartungsbedarf einer betreffenden Verzahnungsschleifmaschine und/oder Bauteilabweichungen zu identifizieren. Die auf die Anmelderin zurückgehende Veröffentlichung DE102018122041A1 beschreibt den Ansatz, anhand von bauteilspezifisch während der Fertigung erfassten Maschinendaten einen "virtuellen" Zwilling des gefertigten Bauteils zu berechnen. Dieser virtuelle Zwilling wird rechnergestützt analysiert, um Geräuschauffälligkeiten und/oder Maschinendefekte zu identifizieren. Hierbei ist nachteilig, dass die Berechnung und Analyse des virtuellen Zwillings einen hohen rechenaufwand erfordern. Weiter hängt die Genauigkeit der Berechnung des virtuellen Zwillings von der exakten Kenntnis der Abweichungen der Werkzeuggeometrie sowie der Maschinenachsen undantriebe ab.

Während der klassische Qualitätsregelkreis rein auf gemessenen Prüfstanddaten basiert, ist der Ansatz gemäß der Veröffentlichung DE102018122041A1 rein datengetrieben, wobei beide Vorgehensweisen zeitintensiv sind.

Vor diesem Hintergrund liegt der vorliegenden Erfindung die technische Problemstellung zugrunde, ein Verfahren anzugeben, dass eine Reduzierung des Prüfaufwands für die Wälzprüfung ermöglicht. Weiter soll ein Verfahren zu Herstellung einer Mehrzahl von Bauteilen angegeben werden.

Die voranstehend beschriebene, technische Problemstellung wird jeweils mit den Merkmalen der unabhängigen Ansprüche gelöst. Vorteilhafte Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Schleifen einer Verzahnung eines Bauteils mittels einer Verzahnungsschleifmaschine, wobei während des Schleifens des Bauteils eine Mehrzahl bauteilspezifischer Maschinendaten erfasst werden, wie Bearbeitungsparameter, Spindelströme, Regelabweichungen oder dergleichen; gekennzeichnet durch Bestimmen eines Ergebnisses oder mehrerer Ergebnisse einer computerimplementierten Wälzprüfung der Verzahnung des Bauteils, indem die bauteilspezifischen Maschinendaten oder daraus abgeleitete Parameter als Eingangsdaten an ein Datenmodell übergeben werden, wobei das Datenmodell Korrelationen zwischen Ergebnissen von prüfstandsbasierten Wälzprüfungen und den Ergebnissen von prüfstandsbasierten Wälzprüfungen zugeordneten, bauteilspezifischen Maschinendaten aufweist und wobei anhand der Eingangsdaten ermittelte Ausgangsdaten des Datenmodells dem zu bestimmenden Ergebnis oder den zu bestimmenden Ergebnissen der computerimplementierten Wälzprüfung entsprechen.

Erfindungsgemäß werden daher bauteilspezifische Maschinendaten mittels eines Datenmodells ausgewertet, dass auf realen Prüfstanddaten basiert. Auf diese Weise können die Vorteile des konventionellen, auf gemessenen Abweichungen basierenden Qualitätsregelkreises mit dem mit denen eines datengetriebenen Ansatzes kombiniert werden. So sind keine aufwändigen und rechenintensiven Simulationen erforderlich, um für einen erfassten Datensatz bauteilspezifischer Maschinendaten zu erwartende Ergebnisse einer Wälzprüfung vorherzusagen.

Die Wälzprüfung ist keine End-of-Line Prüfung auf einem End-of-Line-Prüfstand (EOL-Prüfstand). D.h. die Wälzprüfung des Bauteils erfolgt nicht in der endgültigen Einbausituation in einem Getriebe, sondern durch Abwälzen mit einem Meisterrad oder einem zugehörigen Gegenrad.

Das Merkmal "prüfstandsbasiert Wälzprüfungen" bedeutet im vorliegenden Text, dass es sich hierbei um reale praktische Versuche handelt, die für geschliffene Verzahnungen an einem Wälzprüfstand durchgeführt worden sind. Der Begriff "prüfstandsbasiert" kann daher auch Synonym durch den Begriff "real" oder "praktisch" ersetzt werden, da es sich bei den prüfstandsbasierten Wälzprüfungen um reale bzw. praktische Wälzprüfungen an einem Wälzprüfstand handelt.

Wenn vorliegend das Merkmal "computerimplementierte Wälzprüfung" verwendet wird, so bedeutet dies, dass es sich hierbei um eine virtuelle Wälzprüfung bzw. um eine rechnergestützte Wälzprüfung handelt. Die computerimplementierte Wälzprüfung ist daher eine Datenverarbeitung mit einem Rechner, auf dem ein Softwareprogrammprodukt ausgeführt wird, die das Datenmodell umfasst bzw. auf das Datenmodell zugreift, um aus den bauteilspezifischen Maschinendaten als Eingangsdaten Ergebnisse der virtuellen bzw. rechnergestützten Wälzprüfung als Ausgangsdaten zu ermitteln.

Das Datenmodell kann beispielsweise mindestens ein KI-Modell aufweisen, wobei die Abkürzung "KI" in bekannterweise für "Künstliche Intelligenz" steht. Das KI-Modell kann anhand von Trainingsdaten trainiert worden sein, wobei die Trainingsdaten Ergebnisse von prüfstandsbasierten Wälzprüfungen von Bauteilen und von diesen Bauteilen zugeordneten, bauteilspezifischen Maschinendaten aufweisen.

Die Ergebnisse der prüfstandsbasierten Wälzprüfungen können die Ergebnisse von Prüfstandsversuchen umfassen, und zwar von Einflankenwälzprüfungen und/oder von Zweiflankenwälzprüfungen. Es kann vorgesehen sein, dass ein Prüfstand zur Einflankenwälzprüfung zur Ermittlung der Trainingsdaten verwendet worden ist. Alternativ oder ergänzend kann vorgesehen sein, dass ein Prüfstand zur Zweiflankenwälzprüfung zur Ermittlung der Trainingsdaten verwendet worden ist.

Es kann vorgesehen sein, dass die Trainingsdaten und das mit den Trainingsdaten trainierte KI-Modell maschinenspezifisch und damit einer bestimmten Verzahnungsschleifmaschine zugeordnet sind. Alternativ kann vorgesehen sein, dass Trainingsdaten maschinenübergreifend für mehrere Verzahnungsschleifmaschine erzeugt werden, sodass die Trainingsdaten anhand von Bauteilen ermittelt werden, die mittels verschiedener Verzahnungsschleifmaschinen hergestellt worden sind.

Gemäß einer Ausgestaltung des Verfahrens kann vorgesehen sein, dass eines oder mehrere der nachfolgend aufgelisteten Prüfmerkmale als quantitative und/oder qualitative Ergebnisse der computerimplementierten Wälzprüfung anhand des Datenmodells ausgegeben werden: Achsabstand, Rundlauf, Wälzsprung, Wälzabweichung, Zweikugelmaß, Rundlauffehler, langwellige und/oder kurzwellige Zahn-zu-Zahn Amplitude, maximale Wälzabweichung, Drehfehler und dynamisches Verdrehspiel, Geräuschverhalten, Oberflächenfehler. Insbesondere kann vorgesehen sein, dass quantitative und/oder qualitative Ergebnisse der computerimplementierten Wälzprüfung ausgegeben werden, die Teilungsfehler für eine betreffende Verzahnung umfassen.

Es kann vorgesehen sein, dass das Datenmodell für das jeweilige ausgegebene Prüfmerkmal jeweils ein KI-Modell aufweist. Es kann daher vorgesehen sein, dass für jedes einzelne Prüfmerkmal jeweils ein KI-Modell erzeugt und anhand von Trainingsdaten trainiert worden ist. Das Datenmodell kann daher eine Mehrzahl von KI-Modellen aufweisen, insbesondere ein separates KI-Modell für jedes einzelne Prüfmerkmal.

Gemäß einer Ausgestaltung des Verfahrens kann vorgesehen sein, dass das einem jeweiligen Prüfmerkmal zugeordnete KI-Modell ein künstliches neuronales Netz oder ein Klassifikationsmodell ist.

Es kann vorgehen sein, dass anhand des Ergebnisses der computerimplementierten Wälzprüfung oder der computerimplementierten Ergebnisse der Wälzprüfung eine Frequenzanalyse durchgeführt wird, wie eine FFT-Analyse oder dergleichen, um dominante Frequenzen beim Abwälzen der Verzahnung zu ermitteln.

Alternativ oder ergänzend kann vorgesehen sein, dass das Ergebnis der computerimplementierten Wälzprüfung eine dominante Frequenz beim Abwälzen der Verzahnung ist.

Alternativ oder ergänzend kann vorgesehen sein, dass die Ergebnisse der computerimplementierten Wälzprüfung dominante Frequenzen beim Abwälzen der Verzahnung sind.

Gemäß einer Ausgestaltung des Verfahrens kann vorgesehen sein, dass anhand der Ergebnisse der computerimplementierten Wälzprüfung der Verzahnung Maschinenkorrekturen für die Verzahnungsschleifmaschine bestimmt werden, insbesondere mittels einer Mehrzieloptimierung.

Es kann vorgehen sein, dass die Maschinenkorrekturen Änderungen für Prozessparameter der Verzahnungsschleifmaschine aufweisen, wobei die Prozessparameter innerhalb eines n-dimensionalen Prozessfensters liegen, wobei das Prozessfenster durch Prozessbeschränkungen begrenzt ist, wie maximal zulässige Achs- und/oder Antriebsgeschwindigkeiten und/oder -beschleunigungen, Kollisionsstrukturen innerhalb eines Maschinenbereichs, maximal zulässige Werkzeug- und/oder Werkstücktemperaturen, Schleifbrand oder dergleichen.

Prozessparameter können beispielsweise die bekannten Prozessparameter eines Schleifprozesses sein, die eine Vorschubgeschwindigkeit, eine Werkzeugdrehzahl, ein Schleifweg pro Hubweg, ein Shiftweg pro Hubweg, ein Zeitspanvolumen, eine Zustellung oder Schnitttiefe oder dergleichen.

Gemäß einer Ausgestaltung des Verfahrens kann vorgesehen sein, dass für mindestens einen Prozessparameter ein extrapolierbares Modell bereitgestellt wird, wie ein lineares Regressionsmodell, ein KI-Modell oder dergleichen, wobei des extrapolierbare Modell eine Korrelation zwischen dem Prozessparameter und einer Prozessbeschränkung abbildet und wobei des extrapolierbare Modell für eine durch die Maschinenkorrektur vorgegebene Änderung des Prozessparameters eine Überprüfung der Einhaltung einer Prozessbeschränkung ermöglicht.

So kann ein solches extrapolierbares Modell beispielsweise den Einfluss einer Vorschubgeschwindigkeit und/oder einer Werkzeugdrehzahl und/oder einem Zeitspanvolumen auf die Entstehung von Schleifbrand aufweisen, sodass überprüft werden kann, ob für die vorgeschlagenen Maschinenkorrekturen und die sich daraus ergebenden geänderten Prozessparameter Schleifbrand entsteht oder nicht. Ein weiteres Beispiel wäre die Überprüfung einer mechanischen oder thermischen Beanspruchung des Schleifwerkzeugs für die geänderten Prozessparameter, wobei für die mechanische Beanspruchung und die thermische Beanspruchung jeweils ein separates extrapolierbares Modell angegeben werden kann.

Die Angabe eines oder mehrerer extrapolierbarer Modelle dient daher dazu, aus den computerimplementierten Wälzprüfungen abgeleitete Korrekturen für die Prozessparameter auf deren praktische Anwendbarkeit zu überprüfen.

Es kann vorgehen sein, dass die sich aus den Maschinenkorrekturen ergebenden Prozessparameter bezüglich eines Stabilitätskriteriums überprüft werden, insbesondere dahingehend, dass die Maschinenparameter robust gegenüber Prozessschwankungen sind und/oder dass die Maschinenkorrekturen einen stationären Zustand der Verzahnungsschleifmaschine widerspiegeln.

Bestimmte Kombinationen von Prozessparametern können dazu führen, dass ein Schleifprozess bei nur geringfügigen Abweichungen von diesen Prozessparametern instabil wird, d. h. keine zufriedenstellende Bauteilqualität mehr ermöglicht. Das Stabilitätskriteriums dient daher dazu, zu überprüfen, wie sensitiv die sich aus den Korrekturen ergebenden geänderten Prozessparameter bezüglich Parameterschwankungen sind.

Hierzu können ebenfalls das Datenmodell verwendet werden, das den Zusammenhang zwischen bauteilspezifischen Maschinendaten und den Ergebnissen von Wälzprüfungen enthält. So kann anhand des Datenmodells für Variationen der Prozessparameter in unmittelbarer Nähe dieser Prozessparameter die zu erwartenden Ergebnisse der Wälzprüfungen und damit die Bauteilqualität ermittelt werden. Auf diese Weise kann prognostiziert werden, inwieweit die Bauteilqualität für geringfügige Prozessschwankungen weiterhin erhalten bleibt.

Weiterhin kann mittels des Stabilitätskriteriums überprüft werden, inwieweit die Maschinenkorrekturen einen stationären Zustand bzw. einen stationären Betrieb der Verzahnmaschine ermöglichen. Das bedeutet, es wird überprüft, inwieweit der Prozess, der nunmehr mit um die Maschinenkorrekturen geänderten Prozessparameter durchgeführt wird, ein stabiler Prozess ist, beispielsweise bezogen auf den Werkzeugverschleiß. Hierbei kann wiederum ein extrapolierbares Modell angegeben werden, welches den Zusammenhang zwischen einem Werkzeugverschleiß und einem oder mehreren Prozessparametern angibt. Dieses Stabilitätskriterium könnte gleichermaßen als eine voranstehend bereits beschriebene Prozessbegrenzung bzw. Prozessschranke verwendet werden, sodass geänderte Prozessparameter bzw. Maschinenkorrekturen verworfen werden, soweit sich ein zu hoher Werkzeugverschleiß ergeben würde.

Sowohl für die Stabilitätskriterien als auch für die Prozessbeschränkungen können eigene KI-Modelle mit separaten Trainingsdaten bereitgestellt werden, denen praktische Messungen und Versuche zugrunde liegen.

Gemäß einer Ausgestaltung des Verfahrens kann vorgesehen sein, dass die Maschinendaten Achsbewegungen und/oder Achsbeschleunigungen und/oder Schwingungsdaten einer Maschinenachse oder mehrerer gesteuerter Maschinenachsen der Verzahnungsschleifmaschine aufweisen, wobei die Ergebnisse der computerimplementierten Wälzprüfungen periodische Abweichungen der Ist-Geometrie der Verzahnung von einer Soll-Geometrie der Verzahnung beinhalten, und wobei das Datenmodell insbesondere Korrelationen zwischen den periodischen Abweichungen der Ist-Geometrie der Verzahnung und den Achsbewegungen und/oder Achsbeschleunigungen und/oder Schwingungsdaten der Verzahnungsschleifmaschine abbildet.

Gesteuerte Maschinenachsen weisen für bestimmte Bewegungs- oder Beschleunigungsprofile ein Schwingungsverhalten auf, insbesondere im Bereich ihrer Eigenfrequenzen, die beim Schleifen auf die Flanken der Verzahnung übertragen werden können. Schwingungen der Maschinenachsen werden dabei üblicherweise nicht 1 zu 1 in auf der Zahnflanke zu messende Welligkeiten oder an der Verzahnung zu messende Abweichungen übertragen, sondern es ergibt sich aufgrund der Maschinenkinematik und der entsprechenden Übersetzungen eine Übertragungsfunktion, mit der sich bestimmte Schwingungen einzelner Maschinenachsen an der Verzahnung abbilden. Der Zusammenhang zwischen einer solchen Schwingungsanregung einer Maschinenachse und der entsprechenden an der Verzahnung zu messenden Abweichungen lässt sich jeweils über eine Übertragungsfunktion darstellen. Es kann vorgesehen sein, dass das Datenmodell daher eine oder mehrere Übertragungsfunktionen für eine oder mehrere Maschinenachsen abbildet, sodass mit Achsbewegungen oder Beschleunigungsprofile als Eingangsdaten für das Datenmodell periodische Abweichungen der Verzahnung als Ausgangsdaten bestimmt werden können.

Gemäß einem weiteren Aspekt betrifft die Erfindung ein Verfahren, mit den Verfahrensschritten: Durchführen eines Verfahrens gemäß einem der voranstehenden Ansprüche für eine Mehrzahl von Bauteilen; Durchführen einer prüfstandsbasierten Wälzprüfung für eines oder mehrere der Bauteile zur Validierung und/oder Verbesserung des Datenmodells.

Das Datenmodell kann daher sukzessive verbessert und/oder validiert werden. Beispielsweise kann vorgesehen sein, dass diejenigen Bauteile, die mittels der computerimplementierte Wälzprüfung als Schlechtteile klassifiziert worden sind einem praktischen Versuchen unterzogen werden, d. h. einer prüfstandsbasierten Wälzprüfung, um die Ergebnisse der computerimplementierten Wälzprüfung zu bestätigen. Die Ergebnisse der prüfstandsbasierten Wälzprüfung können jeweils als zusätzliche Trainingsdaten für die computerimplementierte Wälzprüfung verwendet werden, soweit es sich dabei um ein mittels Trainingsdaten trainiertes KI-Modell handelt.

Soweit ein Verzahnungsschleifenverfahren einer neuen Verzahnungsgeometrie für eine Serienfertigung eingerichtet wird, kann beispielsweise vorgesehen sein, dass zunächst alle gefertigten Bauteile einer prüfstandsbasierten Wälzprüfung unterzogen werden. Die Ergebnisse der prüfstandsbasierten Wälzprüfung und die dazugehörigen bauteilspezifischen Maschinendaten werden so lange zum Trainieren eines KI-Modells verwendet, bis das KI-Modell die Ergebnisse der prüfstandsbasierten Wälzprüfung mit einer vorgegebenen Genauigkeit abbildet. D. h. es werden so lange prüfstandsbasierten Wälzprüfungen durchgeführt, bis eine Validierung des KI-Modells erfolgreich ist.

Mit anderen Worten kann eine Validierungsschleife in voranstehend beschriebene Weise so lange durchgeführt werden, bis die vorgegebene Modellgüte erreicht ist. Beispielsweise kann vorgesehen sein, dass die vorgegebene Modellgüte zur Validierung dann erreicht ist, wenn ein Bestimmtheitsmaß größer als 0,8 ist, insbesondere größer als 0,9 ist, insbesondere größer als 0,95 ist.

Soweit die vorgegebene Modellgüte erreicht ist, kann in der Serienfertigung von der prüfstandsbasierten Wälzprüfung auf die computerimplementierte Wälzprüfung umgestellt werden, sodass eine prüfstandsbasierten Wälzprüfungen nur noch bei Bedarf eingesetzt wird.

Soweit für ein bestimmtes Verzahnungsschleifverfahren bereits eine ausreichende Datenbasis vorhanden ist, kann gänzlich auf die Durchführung prüfstandsbasierter Wälzprüfungen verzichtet werden, - und zwar auch bereits bei der Einrichtung des Verzahnungsschleifenverfahrens.

Nachfolgend wird die Erfindung anhand einer Ausführungsbeispiele darstellenden Zeichnung näher beschrieben. Es zeigt schematisch:

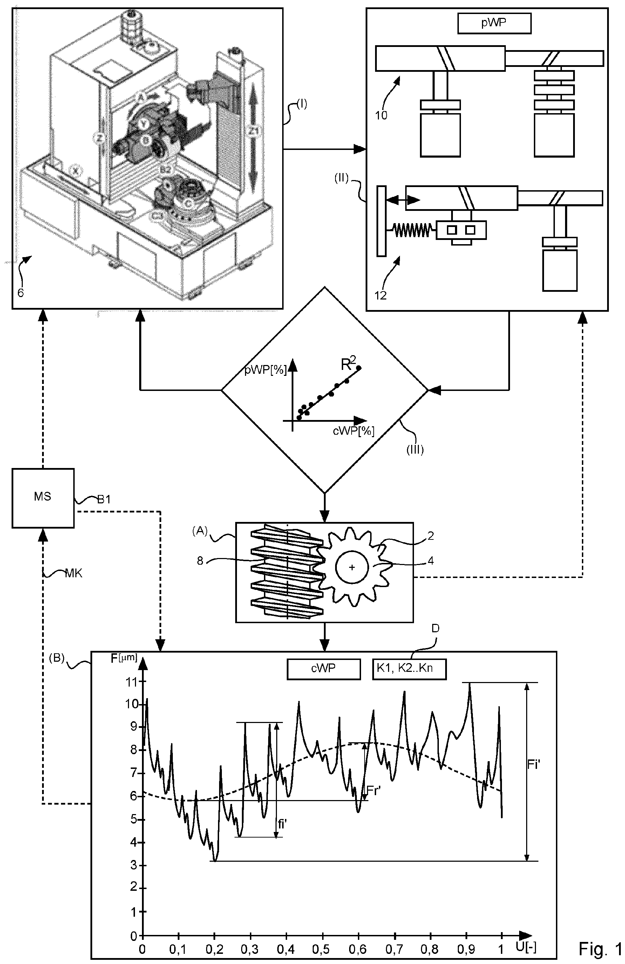

Fig. 1 einen Ablaufplan eines erfindungsgemäßen Verfahrens.

Das erfindungsgemäße Verfahren weist einen Verfahrensschritt (A) auf, der ein Schleifen einer Verzahnung 2 eines Bauteils 4 mittels einer Verzahnungsschleifmaschine 6 umfasst. Eine solche Verzahnungsschleifmaschine 6 ist exemplarisch für einen Verfahrensschritt (I) dargestellt, der später noch ausführlich beschrieben werden wird.

Während des Schleifens der Verzahnung 2 des Bauteils 4 im Verfahrensschritt (A) werden eine Mehrzahl bauteilspezifischer Maschinendaten erfasst, wie Bearbeitungsparameter, Spindelströme, Regelabweichungen der Verzahnungsschleifmaschine 6 oder dergleichen. Bearbeitungsparameter sind daher beispielsweise Vorschübe oder Drehzahlen eines Schleifwerkzeugs 8, eine Schnitttiefe, ein Zeitspanvolumen, eine Hubgeschwindigkeit, ein Shiftweg pro Hubweg oder dergleichen, d. h. diejenigen Parameter, die zur Definition des Schleifprozesses auf der Verzahnungsschleifmaschine 6 erforderlich sind. Vorliegend handelt es sich bei dem Schleifverfahren um ein kontinuierliches Wälzschleifen mittels eines als Schleifschnecke ausgebildeten Schleifwerkzeugs 8.

Nach dem Schleifen der Verzahnung 2 des Bauteils 4 erfolgt in einem Verfahrensschritt (B) das Bestimmen eines Ergebnisses oder mehrerer Ergebnisse einer computerimplementierten Wälzprüfung der Verzahnung 2 des Bauteils 4.

Diese computerimplementierte Wälzprüfung cWP erfolgt, indem die bauteilspezifischen Maschinendaten oder daraus abgeleitete Parameter als Eingangsdaten an ein Datenmodell übergeben werden, wobei das Datenmodell Korrelationen zwischen Ergebnissen von prüfstandsbasierten Wälzprüfungen pWP und den Ergebnissen von prüfstandsbasierten Wälzprüfungen pWP zugeordneten, bauteilspezifischen Maschinendaten aufweist und wobei anhand der Eingangsdaten ermittelte Ausgangsdaten des Datenmodells dem zu bestimmenden Ergebnis oder den zu bestimmenden Ergebnissen der computerimplementierte Wälzprüfung cWP entsprechen.

Bezüglich des Verfahrensschritts (B) ist exemplarisch das Ergebnis einer computerimplementierten Wälzprüfung cWP dargestellt, wobei exemplarisch und schematisch der Drehfehler F in [mm] aufgetragen über einer Umdrehung U des Bauteils 4 - d.h. ein Ergebnis einer Einflankenwälzprüfung des verzahnten Bauteils 4 dargestellt ist. Hieraus lassen sich in bekannter Weise z.B. Werte für den Rundlauffehler erster Ordnung Fr`, die Zahn-zu-Zahn Amplitude fi` und die maximale Wälzabweichung Fi' bestimmen. Gemäß alternativer Ausführungsbeispiele der Erfindung kann vorgesehen sein, dass im Verfahrensschritt (B) Teilungsfehler der Verzahnung 2 mittels der computerimplementierten Wälzprüfung bestimmt werden.

Das Datenmodell cWP kann ein KI-Modell aufweisen, wobei das KI-Modell anhand von Trainingsdaten trainiert worden ist. Das Trainieren und Validieren des KI-Modells wird nachfolgend anhand der Verfahrensschritte (I), (II) und (III) beschrieben.

Es werden aufeinanderfolgend zunächst eine Mehrzahl von Verzahnungen 2 an einer Mehrzahl von Bauteilen 4 mittels der Verzahnungsschleifmaschine 6 im Verfahrensschritt (I) geschliffen, wobei jedes dieser Bauteile 4 nach dem Schleifen einer prüfstandsbasierten Wälzprüfung pWP unterzogen wird, wobei diese prüfstandsbasierte Wälzprüfung im Verfahrensschritt (II) erfolgt. Hierzu sind bezüglich des Verfahrensschritts (II) exemplarisch und schematisch ein Prüfstand 10 zur Einflankenwälzprüfung und ein Prüfstand 12 zur Zweiflankenwälzprüfung dargestellt.

Die Ergebnisse der prüfstandsbasierten Wälzprüfung pWP und die zugeordneten bauteilspezifischen Maschinendaten werden zum Trainieren des KI-Modells verwendet.

Die Verfahrensschritte (I), (II) und (III) werden solange wiederholt, bis ein Bestimmtheitsmaß größer als 95% ist, d.h. bis das KI-Modell die Ergebnisse der praktischen Wälzprüfung pWP mit einer hohen Genauigkeit abbildet.

Die Verfahrensschritte (I), (II) und (III) können auch als Validierungs- oder Trainingsschleife für das KI-Modell bezeichnet werden.

Eines oder mehrere der nachfolgend aufgelisteten Prüfmerkmale können als quantitative und/oder qualitative Ergebnisse der computerimplementierten Wälzprüfung anhand des Datenmodells ausgegeben werden: Achsabstand, Rundlauf, Wälzsprung, Wälzabweichung, Zweikugelmaß, Rundlauffehler, langwellige und/oder kurzwellige Zahn-zu-Zahn Amplitude, maximale Wälzabweichung, Drehfehler und dynamisches Verdrehspiel, Geräuschverhalten, Oberflächenfehler, Teilungsfehler.

Es kann vorgesehen sein, dass für jedes einzelne Prüfmerkmal ein eigenes KI-Modell trainiert und validiert wird, so dass für jedes Prüfmerkmale ein separates KI-Modell vorliegt. Das Datenmodell D kann daher eine Mehrzahl von KI-Modellen K1, K2..Kn aufweisen, die jeweils trainiert und validiert worden sind.

Anhand der Ergebnisse der computerimplementierten Wälzprüfung cWP der Verzahnung können Maschinenkorrekturen MK für die Verzahnungsschleifmaschine 6 bestimmt werden, insbesondere mittels einer Mehrzieloptimierung. Dabei können korrigierte Werte für Vorschübe oder Drehzahlen des Schleifwerkzeugs 8, Schnitttiefe, Zeitspanvolumen, Hubgeschwindigkeit, Shiftweg pro Hubweg oder dergleichen, d. h. diejenigen Parameter, die zur Definition des Schleifprozesses auf der Verzahnungsschleifmaschine 6 erforderlich sind, angegeben werden, um das Schleifergebnis bzw. die Qualität der Verzahnung bezüglich der Prüfmerkmale der Wälzprüfung zu verbessern.

Nachdem die Korrekturen MK der Fertigungsparameter der Verzahnungsschleifmaschine vorgenommen worden sind, kann eine erneute Validierung des KI-Modells oder der KI-Modelle K1, K2..Kn erfolgen, und zwar mittels der Verfahrensschritte (I), (II) und (III).

Maschinenkorrekturen MK können sowohl das mittels der Verzahnungsschleifmaschine 6 durchgeführte Verzahnungsschleifen als auch das mittels der Verzahnungsschleifmaschine 6 durchgeführte Abrichten des Schleifwerkzeugs 8 betreffen.

Die Korrekturen MK können vor deren Anwendung auf der Verzahnungsschleifmaschine 6 in einem Verfahrensschritt (B1) auf die Einhaltung von Prozessbeschränkungen und/oder bezüglich ihrer Stabilität überprüft werden. So kann vorgesehen sein, dass für mindestens einen Prozessparameter ein extrapolierbares Modell MS bereitgestellt wird, wie ein lineares Regressionsmodell, ein KI-Modell oder dergleichen, wobei das extrapolierbare Modell MS eine Korrelation zwischen dem Prozessparameter und einer Prozessbeschränkung abbildet und wobei das extrapolierbare Modell für eine durch die Maschinenkorrektur MK vorgegebene Änderung des Prozessparameters eine Überprüfung der Einhaltung einer Prozessbeschränkung ermöglicht.

Falls der Verfahrensschritt (B1) ergibt, dass Prozessbeschränkungen und/oder ein Stabilitätskriterium nicht eingehalten werden, können mittels der Mehrzieloptimierung angepasste Korrekturen ermittelt und erneut im Schritt (B1) geprüft werden.

Weiter kann vorgesehen sein, dass Verzahnungen 2, die mittels der computerimplementierten Wälzprüfung cWP als Schlechtteile identifiziert worden sind, der prüfstandsbasierten Wälzprüfung pWP zugeführt werden, um die Ergebnisse der computerimplementierten Wälzprüfung cWP zu überprüfen. Die Ergebnisse der prüfstandsbasierten Wälzprüfung pWP können zusammen mit den zugeordneten bauteilspezifischen Maschinendaten als Trainingsdaten zur Verbesserung des KI-Modells oder der KI-Modelle K1, K2..Kn verwendet werden.

Es kann vorgesehen sein, dass während einer Serienfertigung vereinzelt Verzahnungen 2 mittels der prüfstandsbasierten Wälzprüfung pWP getestet werden, sowohl für mittels der computerimplementierten Wälzprüfung cWP als Gutteile als auch als Schlechtteile deklarierte Bauteile 4, um weitere Trainingsdaten zur Verbesserung des KI-Modells bzw. der KI-Modelle K1, K2..Kn zu erzeugen.

Gemäß einem Ausführungsbeispiel der Erfindung können die Maschinendaten Achsbewegungen und/oder Achsbeschleunigungen und/oder Schwingungsdaten einer Maschinenachse oder mehrerer gesteuerter Maschinenachsen X, Y, Z, A, B, C, B2, C3 der Verzahnungsschleifmaschine 6 aufweisen, wobei die Ergebnisse der computerimplementierten Wälzprüfungen cWP periodische Abweichungen der Ist-Geometrie der Verzahnung 2 von einer Soll-Geometrie der Verzahnung 2 beinhalten, und wobei das Datenmodell D insbesondere Korrelationen zwischen den periodischen Abweichungen der Ist-Geometrie der Verzahnung 2 und den Achsbewegungen und/oder Achsbeschleunigungen und/oder Schwingungsdaten der Verzahnungsschleifmaschine 6 abbildet.

### BEZUGSZEICHEN

- 2: Verzahnung
- 4: Bauteil
- 6: Verzahnungsschleifmaschine
- 8: Schleifschnecke
- 10: Prüfstand zur Einflankenwälzprüfung
- 12: Prüfstand zur Zweiflankenwälzprüfung
- (A): Verfahrensschritt
- (B): Verfahrensschritt
- (B1): Verfahrensschritt
- (I): Verfahrensschritt
- (II): Verfahrensschritt
- (III): Verfahrensschritt
- D: Datenmodell
- K1: KI-Modell
- K2: KI-Modell
- Kn: KI-Modell
- MK: Maschinenkorrekturen
- MS: extrapolierbares Modell

## Patentansprüche

1. Verfahren, mit den Verfahrensschritten:
- Schleifen einer Verzahnung (2) eines Bauteils (4) mittels einer Verzahnungsschleifmaschine (6), wobei während des Schleifens des Bauteils (4) eine Mehrzahl bauteilspezifischer Maschinendaten erfasst werden, wie Bearbeitungsparameter, Spindelströme, Regelabweichungen oder dergleichen; **gekennzeichnet durch**
- Bestimmen eines Ergebnisses oder mehrerer Ergebnisse einer computerimplementierten Wälzprüfung (cWP) der Verzahnung (2) des Bauteils (4), indem
- die bauteilspezifischen Maschinendaten oder daraus abgeleitete Parameter als Eingangsdaten an ein Datenmodell übergeben werden,
- wobei das Datenmodell Korrelationen zwischen Ergebnissen von prüfstandsbasierten Wälzprüfungen (pWP) und den Ergebnissen von prüfstandsbasierten Wälzprüfungen (pWP) zugeordneten, bauteilspezifischen Maschinendaten aufweist und
- wobei anhand der Eingangsdaten ermittelte Ausgangsdaten des Datenmodells dem zu bestimmenden Ergebnis oder den zu bestimmenden Ergebnissen der computerimplementierten Wälzprüfung (cWP) entsprechen.

2. Verfahren nach Anspruch 1,
**dadurch gekennzeichnet, dass**
- das Datenmodell mindestens ein KI-Modell aufweist,
- wobei das KI-Modell anhand von Trainingsdaten trainiert worden ist und
- wobei die Trainingsdaten Ergebnisse von prüfstandsbasierten Wälzprüfungen (pWP) von Bauteilen und von diesen Bauteilen zugeordneten, bauteilspezifischen Maschinendaten aufweisen.

3. Verfahren nach Anspruch 2,
**dadurch gekennzeichnet, dass**
die Ergebnisse der prüfstandsbasierten Wälzprüfungen (pWP) die Ergebnisse von Prüfstandsversuchen umfassen, und zwar von Einflankenwälzprüfungen und/oder von Zweiflankenwälzprüfungen.

4. Verfahren nach Anspruch 3
**dadurch gekennzeichnet, dass**
eines oder mehrere der nachfolgend aufgelisteten Prüfmerkmale als quantitative und/oder qualitative Ergebnisse der computerimplementierten Wälzprüfung (cWP) anhand des Datenmodells ausgegeben werden:
Achsabstand, Rundlauf, Wälzsprung, Wälzabweichung, Zweikugelmaß, Rundlauffehler, langwellige und/oder kurzwellige Zahn-zu-Zahn Amplitude, maximale Wälzabweichung, Drehfehler und dynamisches Verdrehspiel, Geräuschverhalten, Oberflächenfehler, Teilungsfehler.

5. Verfahren nach Anspruch 4,
**dadurch gekennzeichnet, dass**
das Datenmodell für das jeweilige ausgegebene Prüfmerkmal jeweils ein KI-Modell aufweist.

6. Verfahren nach Anspruch 5,
**dadurch gekennzeichnet, dass**
das einem jeweiligen Prüfmerkmal zugeordnete KI-Modell ein künstliches neuronales Netz oder ein Klassifikationsmodell ist.

7. Verfahren nach einem der voranstehenden Ansprüche,
**dadurch gekennzeichnet, dass**
anhand des Ergebnisses der computerimplementierten Wälzprüfung (cWP) oder der Ergebnisse der computerimplementierten Wälzprüfung (cWP) eine Frequenzanalyse durchgeführt wird, wie eine FFT-Analyse oder dergleichen, um dominante Frequenzen beim Abwälzen der Verzahnung (2) zu ermitteln
und/oder
das Ergebnis der computerimplementierten Wälzprüfung eine dominante Frequenz beim Abwälzen der Verzahnung (2) ist
und/oder
die Ergebnisse der computerimplementierten Wälzprüfung dominante Frequenzen beim Abwälzen der Verzahnung (2) sind.

8. Verfahren nach einem der voranstehenden Ansprüche,
**dadurch gekennzeichnet, dass**
anhand der Ergebnisse der computerimplementierten Wälzprüfung (cWP) der Verzahnung (2) Maschinenkorrekturen (K) für die Verzahnungsschleifmaschine bestimmt werden, insbesondere mittels einer Mehrzieloptimierung.

9. Verfahren nach Anspruch 8,
**dadurch gekennzeichnet, dass**
- die Maschinenkorrekturen (K) Änderungen für Prozessparameter der Verzahnungsschleifmaschine (6) aufweisen,
- wobei die Prozessparameter innerhalb eines n-dimensionalen Prozessfensters liegen,
- wobei das Prozessfenster durch Prozessbeschränkungen begrenzt ist, wie maximal zulässige Achs- und/oder Antriebsgeschwindigkeiten und/oder -beschleunigungen, Kollisionsstrukturen innerhalb eines Maschinenbereichs, maximal zulässige Werkzeug- und/oder Werkstücktemperaturen, Schleifbrand oder dergleichen.

10. Verfahren nach Anspruch 9,
**dadurch gekennzeichnet, dass**
- für mindestens einen Prozessparameter ein extrapolierbares Modell bereitgestellt wird, wie ein lineares Regressionsmodell, ein KI-Modell oder dergleichen,
- wobei das extrapolierbare Modell eine Korrelation zwischen dem Prozessparameter und einer Prozessbeschränkung abbildet und
- wobei das extrapolierbare Modell für eine durch die Maschinenkorrektur vorgegebene Änderung des Prozessparameters eine Überprüfung der Einhaltung einer Prozessbeschränkung ermöglicht.

11. Verfahren nach Anspruch 9 oder Anspruch 10,
**dadurch gekennzeichnet, dass**
- die sich aus den Maschinenkorrekturen ergebenden Prozessparameter bezüglich eines Stabilitätskriteriums überprüft werden, insbesondere dahingehend,
- dass die Maschinenparameter robust gegenüber Prozessschwankungen sind und/oder
- dass die Maschinenkorrekturen einen stationären Zustand der Verzahnungsschleifmaschine widerspiegeln.

12. Verfahren nach einem der voranstehenden Ansprüche,
**dadurch gekennzeichnet, dass**
- die Maschinendaten Achsbewegungen und/oder Achsbeschleunigungen und/oder Schwingungsdaten einer Maschinenachse oder mehrerer gesteuerter Maschinenachsen der Verzahnungsschleifmaschine aufweisen,
- wobei die Ergebnisse der computerimplementierten Wälzprüfungen periodische Abweichungen der Ist-Geometrie der Verzahnung von einer Soll-Geometrie der Verzahnung beinhalten, und
- wobei das Datenmodell insbesondere Korrelationen zwischen den periodischen Abweichungen der Ist-Geometrie der Verzahnung und den Achsbewegungen und/oder Achsbeschleunigungen und/oder Schwingungsdaten der Verzahnungsschleifmaschine abbildet.

13. Verfahren, mit den Verfahrensschritten:
- Durchführen eines Verfahrens gemäß einem der voranstehenden Ansprüche für eine Mehrzahl von Bauteilen (4);
- Durchführen einer prüfstandsbasierten Wälzprüfung für eines oder mehrere der Bauteile zur Validierung und/oder Verbesserung des Datenmodells.
